# EUROPEAN PATENT SPECIFICATION

(11) **EP 3 897 272 B1**
(45) Date of publication and mention of the grant of the patent: **25.09.2024**
(21) Application number: 19835530.7
(22) Date of filing: 09.12.2019
(51) Int. Cl.: A43D 3/02, B33Y 80/00

(54) **SHOE LAST FOR MANUFACTURING SHOES**
SCHUHLEISTEN ZUR HERSTELLUNG VON SCHUHEN
FORME À CHAUSSURES POUR LA FABRICATION DE CHAUSSURES

(30) Priority: 17.12.2018 IT 201800011142
(43) Date of publication of application: 27.10.2021
(73) Proprietor: Robot System Automation S.R.L., 56035 Perignano Fraz. Casciana Terme Lari (IT)
(72) Inventor: MINUTILLO, Marco, 56031 Bientina (PI) (IT)
(74) Representative: Mincone, Antimo
(86) International application number: PCT/IT2019/050258
(87) International publication number: WO 2020/129099

(56) References cited:
- WO-A1-2006/111995
- WO-A1-2017/078168
- US-A1- 2014 237 738
- US-A1- 2019 152 149

## Description

The present invention relates to a process for making a shoe last for manufacturing shoes.

It is known that the shoe lasts used for the production of shoes have a structure that reproduces the shape of the foot. The shoes are assembled on the shoe lasts according to processes that are generally automated or semi- automated processed. For this purpose, the shoe lasts can be provided with grasping points to be handled by robotized manipulators that move the shoe lasts inside one or more processing stations along predetermined trajectories according to the specific processing operations to be performed.

It is also known that the shoe lasts are mainly obtained by removal of material starting from a block of plastic material intended to assume the predefined shape and dimensions, generally using CAD/CAM techniques.

Drawbacks of the known shoe lasts come from their weight and from the excessive use of the materials used in their production. These drawbacks occur both in directed economic terms, that is, related to the costs of the raw materials and the transport costs, and in environmental terms.

WO 2006/111995 A1 discloses a shoe last having grooves on an outer surface that can be engaged by a handling clamp.

US2019/0152149A1 discloses the use of a 3D printer to fabricate a last that can be used when manufacturing a shoe and that comprises an outer section and an inner section defining a hollow space, a cured filler being provided between the outer and the inner sections.

WO2017/078168A1 discloses a method for making a shoe last comprising a shaping step for shaping an outer section having a hollow space using a 3D printer, and an injecting step for injecting a filling material being in an uncured state into the inside of the outer section that has been shaped at the shaping step or that has been shaped partly at the shaping step.

US20147237738A1 discloses a fusing system that includes an upper member and a base member. The upper member includes a pressing layer and the base member is associated with a last member. The pressing layer has a contoured portion that approximates the shape of a portion of the last member. The upper member can be associated with the base portion and a vacuum can be applied so that the pressing layer is pulled down onto materials disposed on the last member for purposes of fusing the materials together to form articles, such as articles of footwear.

The main purpose of the present invention is to drastically reduce the above-mentioned drawbacks.

This result has been achieved, according to the invention, by adopting the idea of making a shoe last as defined in claim 1. Other features of the invention are the subject of the dependent claims.

Due to the present invention, it is possible to reduce the weight of the shoe last produced according to the invention, without compromising their lifetime, with economic and environmental benefits related to the lower use of raw materials. Furthermore, a shoe last according to the present invention can be suitably provided with grasping areas for its handling by means of robotized manipulators so that the shoe production cycles are not adversely affected. Moreover the present invention avoids the use of fillers for making the shoe last.

These and further advantages and features of the present invention will be more and better understood by each person skilled in the art thanks to the following description and the enclosed drawings, given as a practical example of the invention, but not to be considered in a limitative sense in which:
- Figs. 1 and 2 are two perspective views showing the outer appearance of a shoe last according to the present invention;
- Fig. 3 is a schematic side view partly in transparency of the shoe last of Figs.1 and 2;
- Fig. 4 is a schematic front view partly in transparency of the shoe last of Figs.1 and 2;
- Fig. 5 is a sectional view according to the line B-B of Fig. 3;
- Fig. 6 is a sectional view according to the line A-A of Fig. 4;
- Figs. 7 - 11 show a possible practical implementation of the present invention;
- Figs. 12 -13 show a further mode of implementation of the present invention;
- Fig. 14 is a schematic view in longitudinal section of a shoe last which can be obtained by carrying out a process according to the present invention;
- Figs. 15 -16 show two perspective views of another shoe last which can be obtained by carrying out a process according to the present invention.

Reduced to its essential structure and with reference to the figures of the enclosed drawings, a shoe last(1) according to the present invention is of the type comprising a grasping area (10), for example at the top part of the shoe last. For example, in said grasping area (10) of the shoe last(1) can be provided two grooves (11) in opposite positions in relation to the top part of the shoe last for facilitating the grasping thereof by a robotic manipulator having a clamp whose jaws, therefore, can grasp the shoe last where the grooves (11) are formed. On its upper face, the top part of the shoe last (1) can be provided with a vertical blind hole (12) for facilitating the centering of the robotic manipulator on the last shoe (1). The operations for grasping, handling and release the shoe last by a clamp robotic manipulator, as well as the structure and the operation of the latter, are known to the skilled in the art and therefore will not be further described. Moreover, a horizontal blind hole (13) is provided in the backside of the shoe last(1). For example, in said hole (13) can be inserted a device of the type RFID, that is known per se, to follow the movements of the shoe last in the assembly line of the footwear. Advantageously, the shoe last (1) is hollow, i.e. it has inner cavities. In accordance with what is shown in the attached drawings, the shoe last (1) has a cellular or alveolar structure. In the drawings, the cavities or internal cells defined by said structure are indicated by the reference numeral " 14 ". This structure, implies a lower amount of material for the production of the shoe last(1), and reduces the weight of the same. In other words, the cells (14) are internal cavities of the shoe last(1) and are delimited by the material (15) used to make said structure, i.e the material constituting the solid part of the shoe last.

The geometric shape of said cavities or cells (14) can be any and not necessarily the cells (14) are identical to each other.

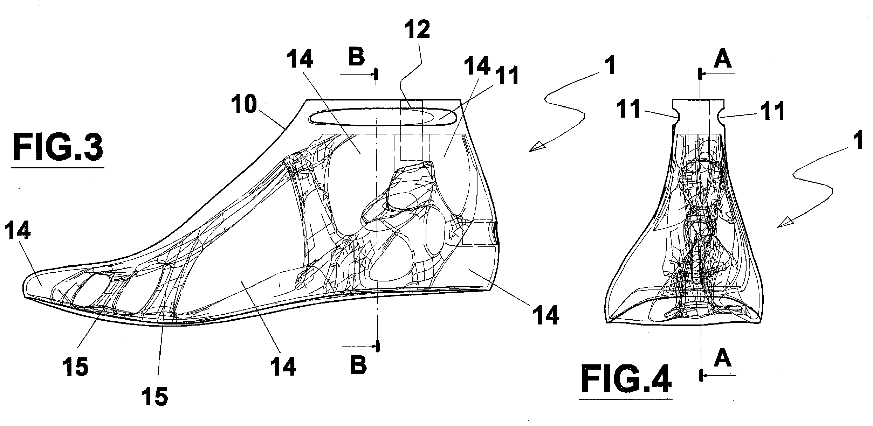

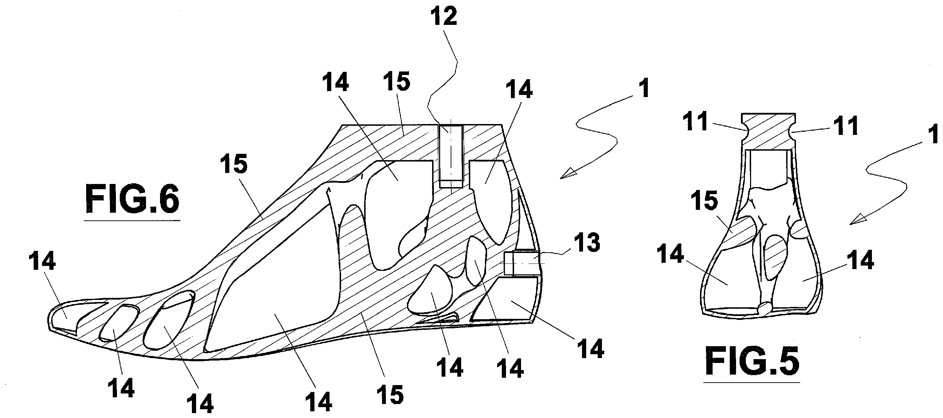

With reference to the example shown in Figs 3-6, the cells (14) are geometrically shaped in a differentiated manner in accordance with their position in the shoe last(1), with a prevalence of cells of greater volume in the central part and cells of minor volume in front, back and top parts of the shoe last.

The shoe last (1) may be produced by "additive manufacturing"(AM), i.e processes that allow to produce tridimensional items whose geometry is known, by means of stratified deposition of materials. Said processes comprise, generally, a step of software modeling of the item whose dimensions and geometric characteristics are contained in a CAD file. This file is subsequently converted in the STL format, which divides the surface in a series of "slice" then used by a 3D printing mechanism for the construction of the layers. The output thus obtained is sent to the 3D print mechanism in which there is materially the production of the item that, at the end of the process, is removed from the machine, cleaned and optionally sent to post-production phases that can provide specific treatments depending on the material used and on the finishing desired features. With reference to the shoe last (1) described above, the steps of post-production may comprise, for example, the application of bushes or reinforcement metal foils in the hole (12) as in other areas of the same shoe last(insole area, tip area etc. ), and/or surface finishing operations.

The process disclosed in the following can be carried out for manufacturing a shoe last according to the present invention.

The material used to produce the shoe last (1) feeds a melting nozzle provided by an extrusion head. The latter is connected to an actuator which moves it along a predetermined path while said material is extruded and is deposited layer by layer in predetermined positions where it cools and solidifies.

The solid part of the shoe last manufactured by the process according to the present invention, that is, the part of the shoe last in which the cavities (14) are formed, is made by the material extruded by said extrusion head. In other words, a shoe last manufactured by the process according to the present invention is made up of a stratification of extruded material along a predefined stratification path delimiting at least one cavity inside the shoe last itself, said at least one cavity being delimited by a solid part (15) of the shoe last composed by said stratification of extruded material, such that the cavities and the solid part of the shoe last are formed simultaneously by extruding said material along said predefined stratification path.

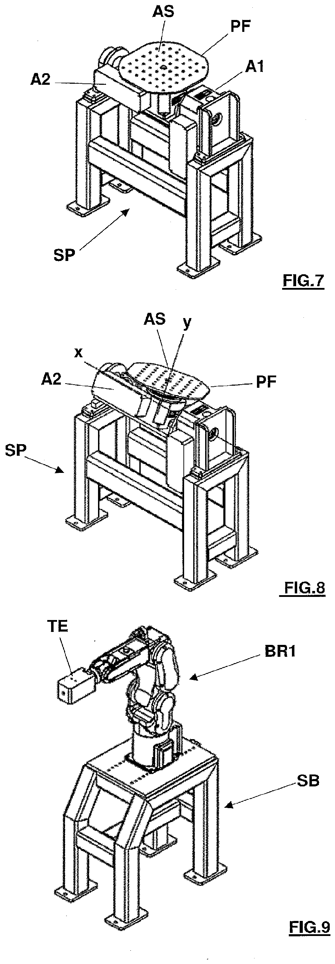

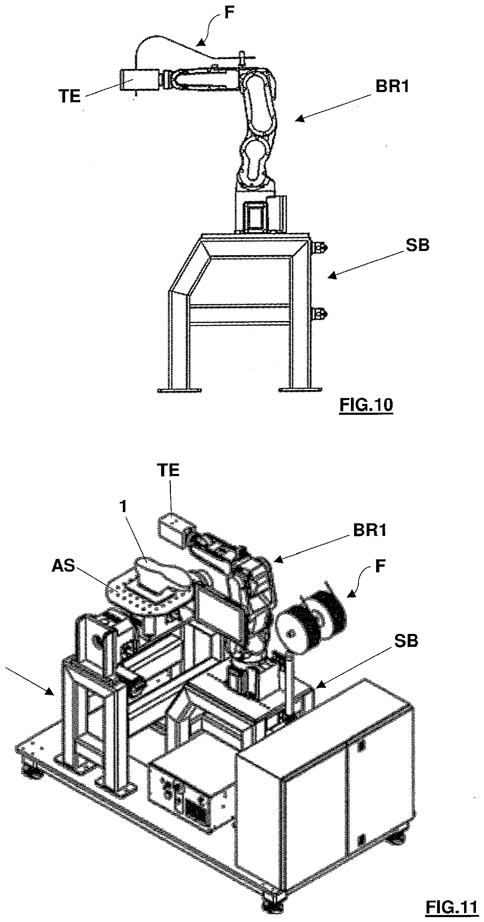

With reference to the example illustrated in Figs. 7-11, a heated yarn (F) of carbon fibers coated with epoxy resin feeds an extrusion head (TE) carried by a robotic arm (BR1) which, in turn, is on a corresponding fixed support (SB). The robotic arm (BR1) allows to orient the extrusion head according to different spatial orientations with respect to a platform (PF) on which the stratification occurs. In this example, the platform (PF)is adapted to rotate and oscillate (as indicated by the axes "x" and "y" in Fig. 8 that are to axes around which the platform PF can rotate) and is driven by a corresponding pair of actuators (Al,A2)which allow to move it, according to a programmed movement scheme, in order to coordinate the movements of the platform (PF) and the movement of the extrusion head (TE) carried by the robotic arm (BR1). The platform (PF) with said actuators (Al, A2) is mounted on a fixed support structure (SP).

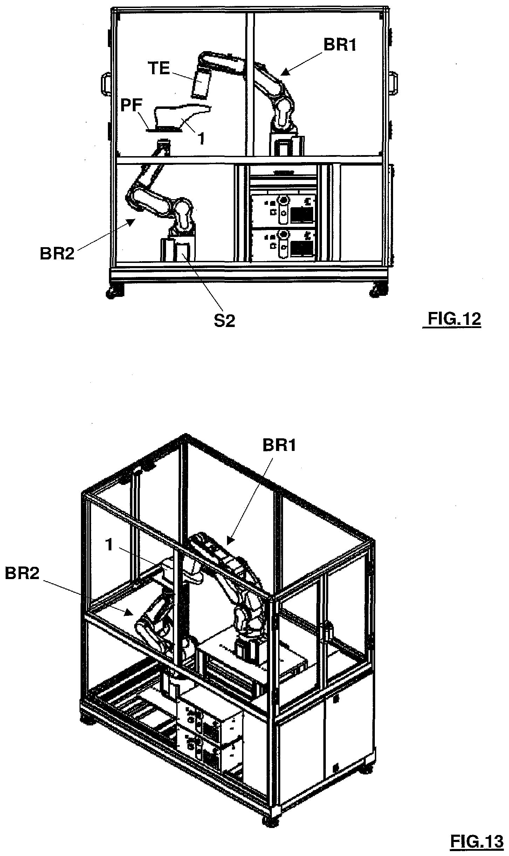

Alternatively, as illustrated in Figs. 12 and 13, the platform (PF) is supported by a further robotic arm (BR2), different from that carrying the extrusion head (TE), such that the deposition of the extruded material derives from the coordinated movements of the two robotic arms (BR1) and (BR2). The further arm (BR2) is also mounted on a respective fixed support (S2).

In both cases, the platform (PF) can be provided with a perforated upper surface (AS) which favors the anchorage of the first layers of material on the same platform and prevents the shoe last being manufactured from falling from the platform (PF) while the latter is moved. The projections that are consequently formed on the lower side of the shoe last can be easily eliminated in post-production by simple grinding operation if their height is excessive with respect to the required finishing.

According to an example the platform (PF) is on a fixed support.

The robotic arms (BR1, BR2) are for example six-axis robotic arms. For example, each robotic arm (BR1, BR2) is a robotic arm commercially known as Fanuc LR Mate 200ID4S used by the applicant for the experimentation of the process described above.

By moving the extrusion head through a robotic arm, and possibly moving the platform (PF) around two different axes as disclosed above, it is possible to provide very complex structures for the shoe last (1).

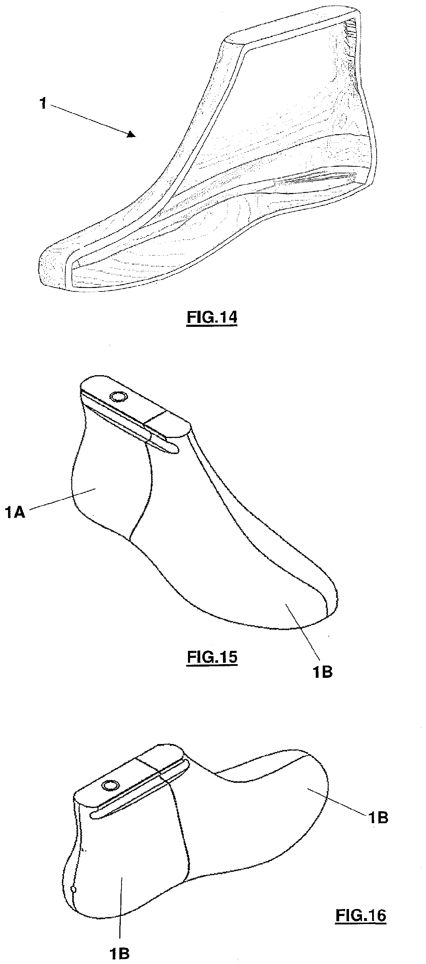

The shoe last (1) can be entirely hollow inside, as schematically represented in Fig. 14, which is not manufactured by the process according to the invention. In this case, the material of which the shoe last (1) is made can be of variable thickness, i.e of increased thickness in some areas which in use will be subjected to greater mechanical stresses.

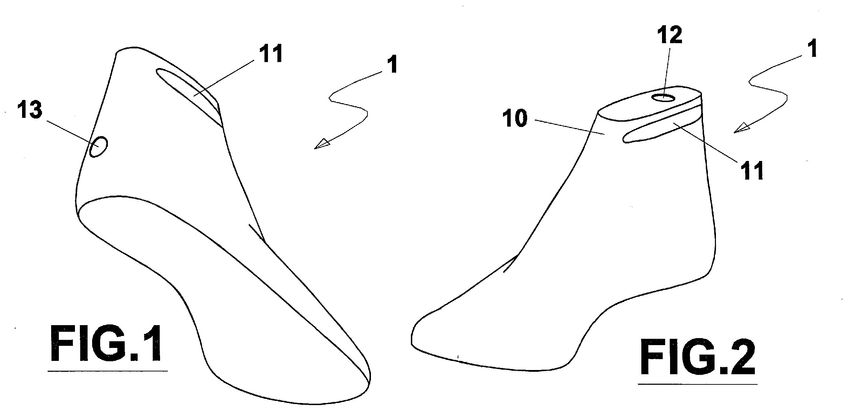

Not necessarily the shoe last (1) is a single piece shoe last as in the example shown in Figs 1- 6. In fact, the shoe last (1) can be composed, for example, of two elements (1A, 1B) complementarily associable with each other. In this case, each element of the shoe last (1) can be made as described above, by AM process using, in particular, an extrusion head mounted on the arm of a robotic arm as the robotic arm(BR1) previously mentioned. In addition, in this case, the platform on which the stratification is carried out can be fixed or movable similarly to what is described above with reference to the other examples of embodiment of the present invention.

In practice all the construction details may vary in any equivalent manner as far as to the individual elements described and illustrated, without thereby departing from the scope of the adopted solution idea and thereby remaining within the protection granted to the present patent in accordance with the following claims.

## Claims

1. Process for making a shoe last comprising a grasping area (10) at its outer surface, the process comprising a stratification of extruded material along a predefined stratification path delimiting cavities inside the shoe last, said cavities being delimited by a solid part (15) of the shoe last composed by said stratification of extruded material, and the cavities and the solid part of the shoe last are formed simultaneously by extruding said material along said predefined stratification path, **characterized by** the fact that the shoe last has a cellular or alveolar structure and the cells (14) of the cellular or alveolar structure are geometrically shaped in a differentiated manner in accordance with their position in the shoe last, with a prevalence of cells of greater volume in the central part and cells of minor volume in front, back and top parts of the shoe last.

2. Process according to claim 1 **characterized by** the fact that in said grasping area (10) grasping grooves (11) are formed.

3. Process according to claim 2 **characterized by** the fact that said grooves are in opposite positions in relation to the top part of the shoe last.

4. Process according to claim 1 **characterized by** the fact that, on its upper face, the top part of the shoe last has a vertical blind hole (12).

5. Process according to claim 1 **characterized by** the fact that the shoe last includes a horizontal blind hole (13) in the area of the back of the foot for the insertion of an RFID-type device.

6. Process according to any of the above claims **characterized by** the fact that the said stratification is made by an extrusion head (TE) supported by a robotic arm (BRl).

7. Process according to claim 6 **characterized by** the fact that the robotic arm (BRl) is an arm with six degrees of freedom.

8. Process according to claim 6 **characterized by** the fact that the said stratification is made on a fixed or mobile platform (PF).

9. Process according to claim 8 **characterized by** the fact that said platform (PF) is mobile and is swiveling and tilting around two axes (x, y).

10. Process according to claim 8 **characterized by** the fact that the said platform (PF) is mobile and is supported by a second robotic arm (BR2).

## Patentansprüche

1. Verfahren zur Herstellung einer Schuhleiste, die einen Griffbereich (10) an ihrer Außenfläche umfasst, wobei das Verfahren eine Schichtung von extrudiertem Material entlang eines vordefinierten Schichtungswegs umfasst, der Hohlräume im Inneren der Schuhleiste abgrenzt, wobei die Hohlräume durch einen festen Teil (15) der Schuhleiste abgegrenzt sind, der aus der Schichtung von extrudiertem Material besteht, und die Hohlräume und der feste Teil der Schuhleiste gleichzeitig durch Extrudieren des Materials entlang des vordefinierten Schichtungswegs gebildet sind, **gekennzeichnet durch** die Tatsache, dass die Schuhleiste eine zelluläre oder alveoläre Struktur aufweist und die Zellen (14) der zellulären oder alveolären Struktur gemäß ihrer Position in der Schuhleiste geometrisch auf differenzierte Weise geformt sind, mit einer Prävalenz von Zellen größeren Volumens im mittleren Teil und Zellen kleineren Volumens im vorderen, hinteren und oberen Teil der Schuhleiste.

2. Verfahren nach Anspruch 1, **gekennzeichnet durch** die Tatsache, dass in dem Griffbereich (10) Griffrillen (11) gebildet sind.

3. Verfahren nach Anspruch 2, **gekennzeichnet durch** die Tatsache, dass sich die Rillen in gegenüberliegenden Positionen in Bezug auf den oberen Teil der Schuhleiste befinden.

4. Verfahren nach Anspruch 1, **gekennzeichnet durch** die Tatsache, dass der obere Teil der Schuhleiste auf seiner Oberseite ein vertikales Sackloch (12) aufweist.

5. Verfahren nach Anspruch 1, **gekennzeichnet durch** die Tatsache, dass die Schuhleiste im Bereich des Fußrückens ein horizontales Sackloch (13) zum Einsetzen einer RFID-artigen Vorrichtung beinhaltet.

6. Verfahren nach einem der obigen Ansprüche, **gekennzeichnet durch** die Tatsache, dass die Schichtung durch einen von einem Roboterarm (BR1) getragenen Extrusionskopf (TE) erfolgt.

7. Verfahren nach Anspruch 6, **gekennzeichnet durch** die Tatsache, dass der Roboterarm (BR1) ein Arm mit sechs Freiheitsgraden ist.

8. Verfahren nach Anspruch 6, **gekennzeichnet durch** die Tatsache, dass die Schichtung auf einer festen oder mobilen Plattform (PF) erfolgt.

9. Verfahren nach Anspruch 8, **gekennzeichnet durch** die Tatsache, dass die Plattform (PF) mobil ist und um zwei Achsen (x, y) schwenkt und kippt.

10. Verfahren nach Anspruch 8, **gekennzeichnet durch** die Tatsache, dass die Plattform (PF) mobil ist und von einem zweiten Roboterarm (BR2) getragen wird.

## Revendications

1. Procédé permettant la fabrication d'une forme à chaussures comprenant une zone de préhension (10) au niveau de sa surface externe, le procédé comprenant une stratification de matériau extrudé le long d'un trajet de stratification prédéfini délimitant des cavités à l'intérieur de la forme à chaussures, lesdites cavités étant délimitées par une partie pleine (15) de la forme à chaussures composée de ladite stratification de matériau extrudé, et les cavités et la partie pleine de la forme à chaussures sont formées simultanément par extrusion dudit matériau le long dudit trajet de stratification prédéfini, **caractérisé par le fait que** la forme à chaussures comporte une structure cellulaire ou alvéolaire et les cellules (14) de la structure cellulaire ou alvéolaire sont mis en forme géométriquement de manière différenciée en fonction de leur position dans la forme à chaussures, avec une prédominance de cellules de plus grand volume dans la partie centrale et de cellules de moindre volume dans les parties avant, arrière et supérieure de la forme à chaussures.

2. Procédé selon la revendication 1, **caractérisé par le fait que** dans ladite zone de préhension (10) des rainures de préhension (11) sont formées.

3. Procédé selon la revendication 2, **caractérisé par le fait que** lesdites rainures se trouvent dans des positions opposées par rapport à la partie supérieure de la forme à chaussures.

4. Procédé selon la revendication 1 **caractérisé par le fait que**, sur sa face supérieure, la partie supérieure de la forme à chaussures comporte un trou borgne vertical (12).

5. Procédé selon la revendication 1 **caractérisé par le fait que** la forme à chaussures comporte un trou borgne horizontal (13) dans la zone de l'arrière du pied pour l'insertion d'un dispositif de type RFID.

6. Procédé selon l'une quelconque des revendications précédentes **caractérisé par le fait que** ladite stratification est réalisée par une tête d'extrusion (TE) supportée par un bras robotique (BR1).

7. Procédé selon la revendication 6 **caractérisé par le fait que** le bras robotique (BR1) est un bras à six degrés de liberté.

8. Procédé selon la revendication 6 **caractérisé par le fait que** ladite stratification est réalisée sur une plateforme fixe ou mobile (PF).

9. Procédé selon la revendication 8 **caractérisé par le fait que** ladite plateforme (PF) est mobile et est pivotante et inclinable autour de deux axes (x, y).

10. Procédé selon la revendication 8 **caractérisé par le fait que** ladite plateforme (PF) est mobile et est supportée par un second bras robotique (BR2).
